# EUROPÄISCHE PATENTSCHRIFT

(11) **EP 2 372 730 B1**
(45) Veröffentlichungstag und Bekanntmachung des Hinweises auf die Patenterteilung: **01.10.2014**
(21) Anmeldenummer: 10158971.1
(22) Anmeldetag: 01.04.2010
(51) Int. Cl.: H01F 27/36, H05K 9/00

(54) **Schaltungsanordnung mit Schaltregler**
Circuit configuration with circuit regulator
Agencement de commutation doté d'un régulateur de commutation

(43) Veröffentlichungstag der Anmeldung: 05.10.2011
(73) Patentinhaber: Ortovox Sportartikel GmbH, 82024 Taufkirchen (DE)
(72) Erfinder: Nowotny, Johann, 81825 München (DE)
(74) Vertreter: Hofstetter, Schurack & Partner

(56) Entgegenhaltungen:
- WO-A2-2008/003006
- DE-A1- 19 725 869
- JP-A- 10 126 092
- JP-A- 10 261 530
- JP-A- 2004 103 837
- US-A- 6 167 249
- US-A1- 2006 096 087

## Beschreibung

Die Erfindung betrifft ein Suchgerät gemäß dem Oberbegriff von Patentanspruch 1. Demnach betrifft die vorliegende Erfindung ein Suchgerät mit einer Schaltungsanordnung, die ein elektrisches Schaltungselement umfasst, mit welchem ein elektrisches Signal bei Durchdringung des Schaltungselements durch ein magnetisches Wechselfeld erzeugbar ist, wobei das elektrische Schaltungselement mindestens eine Ferritantenne mit einer Antennenspule umfasst.

Ein gattungsgemäßes Suchgerät ist bekannt aus der US 6 167 249 A. Bei diesem Suchgerät werden zur Versorgung beispielsweise Batterien verwendet. Die beiden Antennen sind innerhalb eines Schutzgehäuses angeordnet.

Eine Schaltungsanordnung ist eine Anordnung aus elektrischen und elektronischen Bauteilen, die über elektrische Leitungen zu einem einzigen oder zu mehreren unabhängigen Schaltkreisen miteinander verbunden sein können. Ein Beispiel für eine solche Schaltungsanordnung ist eine Leiterplatte mit Leiterbahnen und auf der Leiterplatte aufgelöteten, elektrischen bzw. elektronischen Bauteilen, die über die Leiterbahnen elektrisch miteinander verbunden sind.

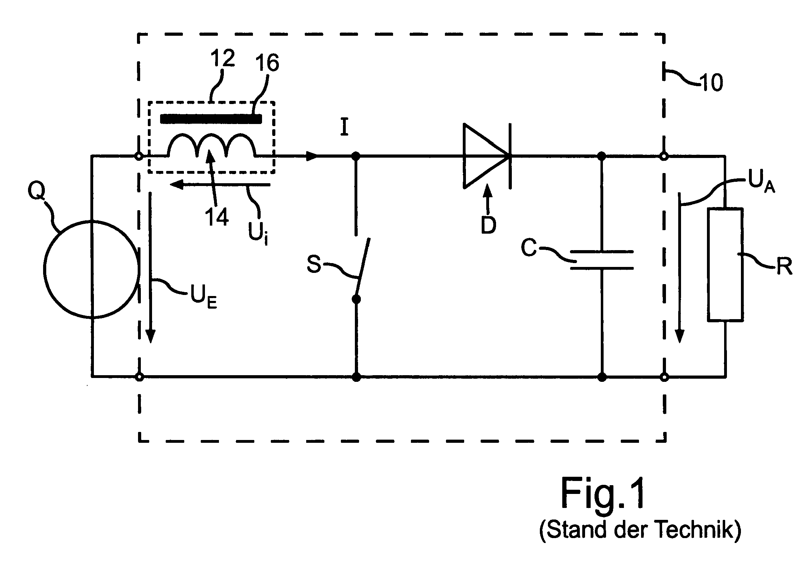

Ein Beispiel für einen Schaltplan eines Schaltreglers ist in Fig. 1 gezeigt. Der in der Fig. 1 gezeigte Schaltregler 10 ist über Eingangsklemmen des Schaltreglers 10 mit einer Gleichspannungsquelle Q elektrisch gekoppelt, durch welche der Schaltregler 10 mit elektrischer Energie versorgt wird. Durch die Gleichspannungsquelle Q wird zwischen den Eingangsklemmen eine Eingangsgleichspannung U_{E} erzeugt. Die Spannungsquelle Q kann beispielsweise eine Batterie oder ein Netzteil mit einem Gleichrichter sein. Der Schaltregler 10 wandelt die Eingangsgleichspannung U_{E} in eine Ausgangsgleichspannung U_{A} um, die dann an einem Ausgang des Schaltreglers 10 bereitgestellt ist. Der Schaltregler 10 kann ein Aufwärtswandler sein, das heißt die Ausgangsgleichspannung U_{A} ist vom Betrage her größer als die Eingangsgleichspannung U_{E}. In ähnlicher Weise kann mittels eines Schaltreglers auch eine Abwärtswandlung bewirkt werden.

An den Ausgang des Schaltreglers 10 ist ein elektrischer Verbraucher angeschlossen, der in Fig. 1 durch einen Widerstand R symbolisch dargestellt ist. Bei dem elektrischen Verbraucher kann es sich um eine elektrische Schaltung, wie zum Beispiel einen Funkwellenempfänger, handeln. Durch den Schaltregler 10 ist eine Spannungsversorgung für den Verbraucher R bereitgestellt.

Der Schaltregler 10 umfasst ein Spulenelement L, einen Schalter S, eine Diode D und einen Kondensator C. Der Schalter S kann beispielsweise ein elektronischer Schalter sein. Ein Beispiel für einen elektronischen Schalter ist ein Transistor, wie z. B. ein Feldeffekt-Transistor (FET). Bei einem Schaltregler kann vorgesehen sein, den Schalter S durch eine in Fig. 1 nicht dargestellte Steuereinrichtung zu betätigen. Wird der Schalter S geschlossen, so wird durch die Spannungsquelle Q ein Strom l erzeugt, der durch eine Spule 14 des Spulenelements 12 fließt. In Fig. 1 ist eine Flussrichtung des Stroms l durch einen Pfeil angezeigt. Der Strom l erzeugt in der Spule 14 ein Magnetfeld. Zu dem Spulenelement 12 gehört auch ein magnetischer Spulenkern 16, durch den ein durch das Magnetfeld hervorgerufener magnetischer Fluss verstärkt wird. Bei dem in Fig. 1 gezeigten Spulenelement 12 sind die Spule 14 und der Spulenkern 16 lediglich symbolisch dargestellt. Der Spulenkern 16 umfasst üblicherweise einen zylindrisch geformten Bereich. Die Spule 14 kann dann aus einem Draht gebildet sein, welcher um den zylindrischen Bereich gewickelt ist.

Durch Öffnen des Schalters S wird der Stromfluss durch den Schalter S unterbrochen. Gemäß dem Gesetz der elektromagnetischen Induktion wird daraufhin durch das Magnetfeld des Spulenelements 12 eine Spannung Uᵢ in der Spule 14 induziert, welche bewirkt, dass der Strom l für eine kurze Zeitdauer aufrechterhalten wird. Der Strom l fließt dabei durch die Diode D und lädt den Kondensator C auf. Die induzierte Spannung Uᵢ ist dabei umso größer, je abrupter die Unterbrechung des Stromflusses durch den Schalter S erfolgt. Dadurch ist es möglich, durch wiederholtes Schließen und anschließendes schnelles Öffnen des Schalters S den Kondensator C soweit aufzuladen, dass die über ihm abfallende Ausgangsgleichspannung U_{A} einen größeren Wert aufweist als die Eingangsgleichspannung U_{E}.

Durch die Steuereinrichtung für den Schalter S können Zeitpunkte bestimmt werden, zu welchen der Schalter S geschlossen beziehungsweise geöffnet wird. Die Steuereinrichtung kann den Schalter S beispielsweise in Abhängigkeit von dem Wert der Ausgangsgleichspannung U_{A} steuern. Diese wiederum hängt vom Ladezustand des Kondensators C ab. Dieser wird dabei um so schneller entladen, je mehr elektrische Leistung der Verbraucher R zu einem bestimmten Zeitpunkt verbraucht. Aus diesem Grund kann sich bei dem Schaltregler 10 ein unregelmäßiges Schalten des Schalters S durch die Steuereinrichtung ergeben.

Bei einer Schaltungsanordnung, in welcher ein Schaltregler, wie z. B. der Schaltregler 10, zum Bereitstellen einer Ausgangsgleichspannung für den Betrieb der Schaltungsanordnung bereitgestellt ist, ergibt sich häufig das Problem, dass durch den Schaltregler eine Störung in Form einer unerwünschten Wechselspannung in einem Schaltungselement der Schaltungsanordnung verursacht wird, wenn es in der Nähe des Spulenelements 12 angeordnet ist. Ein Beispiel für ein solches Schaltungselement ist ein elektrisches Bauteil oder auch eine elektrischen Leitung. Die störende Wechselspannung wird hierbei durch das vom Spulenelement 12 erzeugte Wechsel-Magnetfeld in dem Schaltungselement induziert. Grund für diese Induktion einer Störspannung ist, dass das Magnetfeld, welches von der Spule 14 des Spulenelements 12 erzeugt wird, als Streufeld in eine Umgebung des Spulenelements 12 ragt. Dabei kann es vorkommen, dass dieses Streufeld das Schaltungselement durchdringt. Bei einer Veränderung der Feldstärke des Streufelds, also beispielsweise beim Schalten des Schalters S, führt dies dann dazu, dass in dem Schaltungselement eine Spannung ähnlich der Spannung Uᵢ induziert wird. Diese derart induzierte Störspannung kann sich dann beispielsweise anderen Spannungssignalen in dem Schaltungselement überlagern und so die Funktionsweise des Schaltungselements beeinträchtigen.

Um eine solche unerwünschte Induktion einer Störspannung in einem Schaltungselement einer Schaltungsanordnung zu vermeiden, ist es bekannt, Bauteile, welche ein Streufeld in ihrer Umgebung erzeugen, mit einer magnetischen Abschirmung zu umgeben. Im Zusammenhang mit einer Spannungsversorgung für eine Schaltungsanordnung ist es dabei bekannt, einen Transformator zum Wandeln einer Eingangswechselspannung in eine Ausgangswechselspannung mit einem ferromagnetischen Material zu umgeben. In diesem Zusammenhang wird häufig eine Abschirmung aus Mu-Metall verwendet. Dabei handelt es sich um eine weichmagnetische Nickel-Eisen-Legierung mit einer hohen magnetischen Permeabilität, das heißt einer hohen magnetischen Leitfähigkeit. Im Zusammenhang mit einem Schaltregler, wie dem Schaltregler 10, ist denkbar, auch bei diesem das Spulenelement ähnlich wie einen Transformator mit einer magnetischen Abschirmung, beispielsweise aus Mu-Metall, zu umgeben. Dabei zeigt sich jedoch, dass von dem Streufeld des Spulenelements ein großer Anteil durch diese Abschirmung hindurchtritt und weiterhin Störspannungen in umliegenden Bauteilen erzeugt.

Grund dafür ist, dass der Wert für die magnetische Leitfähigkeit von Materialien für eine magnetische Abschirmung, also auch von Mu-Metall, frequenzabhängig ist. Das Abschirmen von magnetischen Feldern mittels Mu-Metall ist deshalb nur für solche Magnetfelder möglich, deren Feldstärke sich höchstens mit einer Frequenz von deutlich unter 100 kHz verändert. In einigen Fällen kann ein Schirmungseffekt bereits für Wechselfrequenzen von über 10 kHz signifikant geringer sein. Bei Transformatoren ist eine wirksame Abschirmung mittels MU-Metall nur deshalb möglich, weil die Wechselfrequenz des Magnetfelds oftmals nur 50 Hz oder 60 Hz beträgt. Sie liegt also weit unterhalb der Grenzfrequenz von einigen 10 kHz. Genaue Messungen zeigen, dass nicht nur Mu-Metall, sondern auch viele andere ferromagnetische Materialien in der Regel nur zum Abschirmen von statischen magnetischen Feldern und solchen magnetischen Wechselfeldern geeignet sind, deren Feldstärke sich mit einer Frequenz von deutlich unter 100 kHz verändert.

Um bei einem Schaltregler an dessen Ausgang ausreichend elektrische Leistung bereitstellen zu können, muss der Schalter zum Steuern des Stroms durch das Spulenelement dagegen oftmals mit einer Frequenz von weit über 10 kHz geschaltet werden. Die Schaltfrequenz kann zwischen 100 kHz und mehreren MHz, z. B. 3 MHz, betragen. Hinzu kommt noch, dass der Strom durch das Spulenelement keinen harmonischen, d. h. sinusförmigen, Verlauf aufweist. Wie bereits beschrieben, muss der Strom durch den Schalter ja abrupt geändert werden. Je nach Steuerung des Schalters des Schaltreglers durch seine Steuereinrichtung kann das Schaltsignal auch einen sehr unregelmäßigen Verlauf aufweisen. Entsprechend unregelmäßig ist dann auch der zeitliche Verlauf der Feldstärke des magnetischen Wechselfelds. Die Feldstärke kann sich mit anderen Worten nicht-harmonisch, transient oder instationär verhalten.

Insgesamt kann ein Verlauf der Feldstärke des magnetischen Wechselfelds des Spulenelements dadurch Frequenzkomponenten aufweisen, deren Frequenz über 100 kHz liegt. Welche Frequenzkomponenten ein magnetisches Wechselfeld aufweist, lässt sich beispielsweise durch Messen der Feldstärke dieses Wechselfelds und eine anschließende spektrale Analyse des Verlaufs der gemessenen Feldstärke bestimmen. Für diejenigen Anteile eines magnetischen Wechselfelds, bei denen sich die Feldstärke mit einer Frequenz von über 10 kHz ändert, ist eine Abschirmung z.B. mithilfe von Mu-Metall nur unzureichend möglich.

Als eine weitere Form der Abschirmung ist das Dämpfen von elektromagnetischer Strahlung mittels eines Blechs bekannt. Wird beispielsweise ein Stahlblech zwischen eine Quelle einer elektromagnetischen Strahlung und ein elektrisches Bauteil gebracht, so kann die elektromagnetische Strahlung beim Durchdringen des Stahlblechs so weit gedämpft werden, dass eine durch die elektromagnetische Strahlung in dem Bauteil hervorgerufene Störspannung verschwindend gering ist. Diese schirmende Wirkung des Stahlblechs beruht dabei auf dem Effekt, dass das elektrische Wechselfeld der elektromagnetischen Strahlung einen Strom in dem Stahlblech hervorruft, wodurch wiederum eine Strahlungsintensität der elektromagnetischen Strahlung abgeschwächt wird. Im Zusammenhang mit einer Abschirmung eines Spulenelements eines Schaltreglers zeigt sich jedoch, dass durch die elektrische Leitfähigkeit des Blechs auch eine Güte der Spule des Schaltreglers in unerwünschter Weise verringert wird. Die Spulengüte ist dabei das Verhältnis des Blindwiderstands des Spulenelements zu dem Wirkwiderstand des Spulenelements. Die Verschlechterung der Güte hat ihren Grund u.a. darin, dass durch das magnetische Streufeld des Spulenelements elektrische Wirbelströme in dem Stahlblech induziert werden und hierdurch ein Teil der Energie des Magnetfelds des Spulenelements durch ohmsche Verluste in dem Stahlblech verloren geht. Im Zusammenhang mit einem Schaltregler ist ein hoher Wert für die Spulengüte des Spulenelements besonders dann sehr wichtig, wenn der Schaltregler mit einer Batterie betrieben wird. Andernfalls geht ein unerwünscht großer Anteil der in der Batterie gespeicherten elektrischen Energie durch die Verluste in der Abschirmung verloren.

Als weiteres Problem kommt hinzu, dass zum Abschirmen des Spulenelements mittels eines Stahlblechs eine Blechstärke von ca. 3 mm nötig ist. Ein Gehäuse für ein Spulenelement, das aus einem solchen Blech gefertigt ist, ist dann so groß, dass es sich nur mit großem Aufwand beispielsweise auf einer Leiterplatte anbringen lässt, auf welcher das Spulenelement und weitere Bauelemente einer Schaltungsanordnung aufgelötet sein können. Dies ist insbesondere dann der Fall, wenn die Schaltungsanordnung aus Bauteilen in SMD-Technik (SMD - surface mounted device, oberflächenmontierbares Bauelement) gefertigt ist.

Im Zusammenhang mit Lang- und Mittelwellenfunk ist bekannt, zum Empfangen der Funkwellen eine Ferritantenne zu verwenden, d. h. eine Spule, die auf einen Ferritstab aufgeschoben ist. Der Stab kann dabei länger als die Spule sein. Durch den Ferritstab wird bewirkt, dass ein Teil eines die Spule umgebenden magnetischen Wechselfelds des Funksenders durch die Spule hindurchgeführt wird. Dies verbessert das von der Spule erzeugte elektrische Signal beim Empfang der Funkwellen.

Die WO 2008/003006 A2 betrifft eine konfigurierbare magnetische Struktur, bei der ein so genannter vier-seitiger Topfkern dazu benutzt wird, einen möglichst großen Anteil des in einer Spule erzeugten Feldes im Innenbereich der Struktur zu halten und für die Kopplung zweier Wicklungen nutzbar zu machen. Der Hinweis auf eine hohe Reluktanz des Luftspalts zwischen innerem Kern und Topfkern deutet darauf hin, dass es erstrebenswert ist, einen möglichst geringen Teil des magnetischen Feldes durch den Topfkern zu führen. Im Vordergrund der WO 2008/003006 A2 steht die Montage, die einfacher ausgestaltet werden soll als bei einem Toroid.

Die JP 2004 103837 A betrifft einen DC/DC-Wandler, der möglichst dünn ausgebildet ist und wenig Rauschen verursacht. Dabei kommt eine Spule zu Einsatz, die dünn mit magnetischem Harz bedeckt ist, welches einen metallischen Puder mit einer magnetischen Substanz enthält. Dadurch wird ein geschlossener magnetischer Kreis geformt und der magnetische Verlustfluss wird reduziert.

Die JP 10 261530 A betrifft eine elektromagnetisch abgeschirmte Spule, bei der eine auf einen Kern gewickelte Spule von einer Abschirmung umgeben ist, die aus Metallfolien-Abschirmungsmaterial besteht, das durch eine Vielzahl von Wicklungen aus einem dünnen filmförmigen Band mit einem magnetischen Material auf die äußere Oberfläche der Spule gewickelt ist.

Die JP 10 126092 A betrifft ein Material mit einer Gummimischung, das mit magnetischem Puder gemischt ist. Dieses weist eine Hülsenform auf, wird über einen Transformator oder eine Schutzdrossel gestülpt und schirmt die magnetischen Verluste des Transformators oder der Schutzdrossel ab. Hier verläuft die Orientierung der Schutzdrossel sowie die Orientierung der Abschirmung parallel.

Aus der DE 197 25 869 A1 geht hervor, dass Ferrite grundsätzlich zur Abschirmung von Hochfrequenz genutzt werden können. Sie betrifft insbesondere Radiofrequenz-Weichferrit-Material zur Herstellung von Einrichtungen zur Abschirmung von Radiofrequenzen wie Drahtspulen-Induktoren und -Komponenten.

Aufgabe der vorliegenden Erfindung ist es, bei einem Suchgerät eine Störung eines Schaltungselements durch einen Schaltregler weiter zu reduzieren und hierbei eine Spulengüte der Spule des Schaltreglers möglichst wenig zu verringern.

Die Aufgabe wird durch ein Suchgerät gemäß Patentanspruch 1 gelöst. Vorteilhafte Weiterbildungen des erfindungsgemäßen Suchgeräts sind durch die Unteransprüche gegeben.

Bei dem erfindungsgemäßen Suchgerät weist der Schaltregler ein Spulenelement mit einer Spule zum Erzeugen eines Spulenwechselfelds auf. Das Spulenelement ist selbstverständlich nicht identisch mit dem Schaltungselement. Bei einem Betrieb des Suchgeräts erstreckt sich ein Teil des Spulenwechselfelds als ein magnetisches Streufeld in eine Umgebung des Spulenelements. Wie bereits beschrieben, umfasst bei einem Schaltregler ein zeitlicher Verlauf einer Feldstärke des Spulenwechselfelds zumindest für eine begrenzte Zeitdauer eine bestimmte Frequenzkomponente. Das Spulenelement ist deshalb in einem Körper angeordnet, welcher zumindest teilweise aus einem magnetischen Material gebildet ist, welches für die bestimmte Frequenzkomponente eine derart bemessene magnetische Leitfähigkeit aufweist, dass zumindest ein Teil des Streufelds in dem Körper führbar ist. Dies ist vergleichbar mit dem Ferritstab der bereits erwähnten Ferritantenne, der auch das Wechselfeld des Senders durch die Antennenspule des Empfängers führt. Bei dem erfindungsgemäßen Suchgerät ist jedoch die Form des Körpers derart ausgestaltet, dass von dem mittels des Körpers geführten Teil des magnetischen Streufelds zumindest ein Teil an dem Schaltungselement vorbeiführbar ist.

Dadurch ergibt sich der Vorteil, dass dieser Teil des Streufelds keine Störspannung in dem Schaltungselement verursacht. Die Erfindung beruht dabei auf der Erkenntnis, dass ähnlich wie bei dem Ferritstab einer Ferritantenne ein Körper aus einem magnetischen Material dazu genutzt werden kann, ein magnetisches Wechselfeld zu führen. Ein durch ein magnetisches Material geführtes Magnetfeld zeichnet sich dadurch aus, dass ein räumlicher Verlauf des Magnetfelds signifikant verändert ist, wenn der Körper in dem Feld angeordnet ist. Diese Veränderung ist natürlich im Vergleich zu dem räumlichen Verlauf des Feldes ohne den Körper bemessen. Der Verlauf des Feldes ist beispielsweise anhand von zu dem Feld gebildeten Feldlinien darstellbar. Natürlich kann sich diese Veränderung des Verlaufs auch auf Teile des Felds erstrecken, die sich außerhalb des Materials befinden.

Bei dem erfindungsgemäßen Suchgerät wird das Streufeld des Spulenelements des Schaltreglers an dem Schaltungselement vorbeigeführt. Bildlich gesprochen kann somit also eine Feldlinie, die das Schaltungselement durchdringen würde, wenn der Körper nicht vorhanden wäre, mittels des Körper "umgebogen" und an dem Schaltungselement vorgeführt werden. Dies kann als die Umkehrung des Prinzips der Ferritantenne gesehen werden, bei der ja der Ferritstab dazu genutzt wird, das magnetische Wechselfeld durch die Antennenspule des Empfängers hindurchzuführen.

Vorliegend wird unter einem elektrischen Schaltungselement eine Ferritantenne oder eine Anordnung aus mehreren Ferritantennen verstanden.

Damit die Störung der Funktionsweise eines Schaltungselements durch eine Induktion einer Störspannung in dem Schaltungselement besonders gering ist, umfasst der in dem Körper geführte Teil des Streufelds bevorzugt zumindest 50 Prozent der magnetischen Gesamtenergie des Streufelds. Insbesondere wird mindestens 70 Prozent und ganz besonders mindestens 90 Prozent umfasst.

In Bezug auf das Material des Körpers, in dem das Spulenelement angeordnet ist, wird erfindungsgemäß eine solche Frequenzkomponente gewählt, die eine Frequenz in einem Bereich zwischen 300 kHz und 600 kHz aufweist. Frequenzkomponenten mit einer Frequenz aus diesem Intervall treten bei einem Schaltregler mit einer besonders großen Wahrscheinlichkeit auf. Daher ergibt sich bei einer entsprechenden Wahl des Materials des Körpers der Vorteil, dass ein besonders großer Anteil des Streufelds an dem Schaltungselement vorbeiführbar ist.

Das Spulenelement kann zusätzlich einen Spulenkern zum Festlegen einer Induktivität des Spulenelements aufweisen. Dann befindet sich ein Teil des Spulenwechselfelds in dem Spulenkern. Das Streufeld ergibt sich entsprechend als der übrige Teil des Spulenwechselfelds. Unter den Begriff Spulenkern fallen im Zusammenhang mit der Erfindung auch solche Kerne, welche die Spule auch von außen umgeben. Ein Beispiel für einen solchen Spulenkern ist ein Schalenkern. Durch Bereitstellen eines Spulenkerns ergibt sich der Vorteil, dass die Induktivität des Spulenelements auf einen für den Betrieb des Schaltreglers optimalen Wert unabhängig davon eingestellt werden kann, welches Material und welche Form für den Körper gewählt werden.

Das Material des Körpers weist bevorzugt eine derart geringe elektrische Leitfähigkeit auf, dass bei dem Spulenelement eine Spulengüte durch den Körper nicht signifikant beeinflusst wird. Hierzu wird das Material bevorzugt derart gewählt, dass sich ein Wert für die Spulengüte, welche das Spulenelement aufweist, wenn es sich außerhalb des Körpers befindet, von einem Wert für die Spulengüte, welche das Spulenelement aufweist, wenn es in dem Körper angeordnet ist, um weniger als 30 Prozent, bevorzugt weniger als 15 Prozent, unterscheidet. Mit einer Anordnung des Spulenelements außerhalb des Körpers ist hier gemeint, dass der Körper einen sehr großen Abstand zu dem Spulenelement, also beispielsweise 1 m, aufweist. Durch Bereitstellen eines Körpers aus einem elektrisch nicht leitfähigen oder zumindest einem elektrisch nur gering leitfähigen Material ergibt sich der Vorteil, dass ein Spulenelement mit einer hohen Spulengüte verwendet werden kann und diese Spulengüte durch das Anordnen des Spulenelements in dem Körper nicht signifikant beeinträchtigt wird. Es kann somit ein Schaltregler mit einem besonders hohen Wirkungsgrad in dem Suchgerät bereitgestellt werden.

Das Material des Körpers ist bevorzugt ein amorphes Metall oder ein Ferrit. Diese Materialien weisen viele der bereits beschriebenen bevorzugten Eigenschaften auf. Insbesondere ein Ferrit weist eine große magnetische Leitfähigkeit für magnetische Wechselfelder im Bereich über 100 kHz und zugleich eine sehr geringe elektrische Leitfähigkeit auf.

Die Form des Körpers ist derart gewählt, dass das Spulenelement in zumindest einer Ebene vollständig von dem Körper umgeben ist. Durch Ausgestalten des Körpers derart, dass sich ein Pfad ergibt, auf dem man innerhalb des Körpers einmal um das Spulenelement herum gelangen kann, ergibt sich der Vorteil, dass sich die aus dem Spulenelement austretenden Feldlinien des Streufelds über den Körper schließen können. Erfindungsgemäß ist dabei die Spulenachse der Spule des Spulenelements in derselben Ebene angeordnet, in der auch der Pfad verläuft. Dadurch ist das Führen der Streufelds durch den Körper besonders begünstigt.

In Bezug auf die Form des Körpers ergibt sich hierzu eine Alternative, bei der das Spulenelement in einem rohrförmigen Körper angeordnet ist, dessen Wandung, die in einem Bereich zwischen dem Spulenelement und dem Schaltungselement angeordnet ist, einen Längsspalt aufweist. Dann durchdringt ein Streufeld, das sich von dem Spulenelement aus unmittelbar in die Richtung des Schaltungselements erstreckt, die Wandung des Körpers, so dass ein Großteil des Streufelds durch die Wandung des Körpers umgelenkt und so von dem Körper an dem Schaltungselement vorbeigeführt wird.

Der Körper kann beispielsweise röhrenförmig oder hülsenförmig oder kuppelförmig oder als ein Gehäuse ausgestaltet sein. Bei solchen Formen ergibt sich der Vorteil, dass sich das Spulenelement bei einer Montage des Suchgeräts einfach in dem Körper anordnen lässt. Durch gleichmäßig gekrümmte Wandungen, wie sie beispielsweise ein Rohr oder eine Hülse oder eine Kuppel aufweisen, ergibt sich des Weiteren der Vorteil, dass beim Führen des Streufelds innerhalb des Körpers nur ein geringer Anteil des Streufelds wieder aus dem Körper heraustritt.

In einer bevorzugten Ausführungsform des erfindungsgemäßen Suchgeräts ist der Körper ein Rohr. Dabei ist eine Achse der Spule senkrecht zu einer Achse des Rohrs angeordnet. Für diese Weiterbildung hat sich in Messungen gezeigt, dass das Streufeld des Spulenelements besonders wirkungsvoll mittels des Körpers geführt werden kann.

Erfindungsgemäß umfasst das Schaltungselement eine Ferritantenne mit einer Antennenspule. Hierbei ist durch die erfindungsgemäßen Maßnahmen sichergestellt, dass nahezu keine Störspannung in der Antennenspule der Ferritantenne durch das Spulenelement des Schaltreglers induziert wird. Mittels dieser Ferritantenne können so besonders schwache Signale eines Senders empfangen werden.

Das Suchgerät mit Ferritantenne wird in vorteilhafter Weise weitergebildet, wenn das Schaltungselement zusätzlich mindestens eine weitere Ferritantenne mit einer weiteren Antennenspule umfasst. Bei dieser Weiterbildung sind die Achse der Spule des Spulenelements sowie Achsen der beiden Antennenspulen in einer gemeinsamen Ebene angeordnet. Durch Bereitstellen von zwei Ferritantennen lässt sich ein besonders guter Empfang in zwei unterschiedliche Raumrichtungen gewährleisten. Durch die beschriebene Anordnung der Achsen ist dabei sichergestellt, dass in keiner der beiden Antennenspulen eine signifikante Störspannung induziert wird.

Bei dem Schaltregler ist ein Betrag der Eingangsgleichspannung kleiner als ein Betrag der Ausgangsgleichspannung. Mit anderen Worten handelt es sich bei dem Schaltregler um einen Aufwärtswandler. Dann lässt sich die Eingangsgleichspannung z.B. mit einer einfachen Batterie bereitstellen und es ist mittels des Schaltreglers möglich, eine benötigte größere Ausgangsgleichspannung zu erzeugen. Es ist dabei möglich, auch ein solches Schaltungselement in der Nähe des Schaltreglers zu betreiben, das durch ein magnetisches Wechselfeld gestört werden kann. Bei dem erfindungsgemäßen Suchgerät lässt sich ja ein störender Anteil eines Streufelds des Spulenelements an dem Schaltungselement einfach vorbeiführen.

Wird die Eingangsgleichspannung mit einer Batterie erzeugt, lässt sich das Suchgerät zudem für ein tragbares Gerät verwenden. Ein besonders kompaktes Gerät lässt sich dabei dadurch bereitstellen, dass die Eingangsgleichspannung mittels einer einzigen Batterie erzeugt wird. Ein Beispiel für ein tragbares Gerät, das mit Batterien beziehungsweise einer einzigen Batterie betrieben werden können soll, ist ein Lawinenverschüttetensuchgerät. Ein solches Gerät muss besonders klein und leicht sein, damit es einfach transportiert werden kann. Mittels des Schaltreglers ist es dabei möglich, auf besonders energieeffiziente Weise die durch die Batterien beziehungsweise die einzige Batterie erzeugte Eingangsgleichspannung in eine gewünschte Ausgangsgleichspannung für einen Betrieb des Geräts zu wandeln.

Die Erfindung wird im Folgenden anhand von Ausführungsbeispielen näher erläutert. Dazu zeigt:
- Fig. 1: einen Schaltplan für einen Schaltregler gemäß dem Stand der Technik;
- Fig. 2: eine schematische Darstellung einer Spule mit einem Schalenkern, welche Bestandteile eines Spulenelements eines Schaltreglers in einer Ausführungsform des erfindungsgemäßen Suchgeräts sind;
- Fig. 3: eine schematische Darstellung eines Spulenelements in einem Körper, die Bestandteile einer weiteren Ausführungsform des erfindungsgemäßen Suchgeräts sind;
- Fig. 4: eine schematische Darstellung einer Anordnung aus einem Ferritrohr und einem darin angeordneten Spulenelement gemäß einer weiteren Ausführungsform des erfindungsgemäßen Suchgeräts;
- Fig. 5: eine schematische Darstellung eines Lawinenverschüttetensuchgeräts gemäß einer weiteren Ausführungsform des erfindungsgemäßen Suchgeräts; und
- Fig. 6: eine schematische Darstellung einer weiteren Ausführungsform des erfindungsgemäßen Suchgeräts, bei welcher eine Wandung eines Körpers zwischen einem Spulenelement und einem Schaltungselement angeordnet ist.

Bei den Beispielen sind die im Folgenden erläuterten Merkmale auch in Alleinstellung oder in einer anderen als der gezeigten Kombination als Bestandteil der Erfindung zu verstehen.

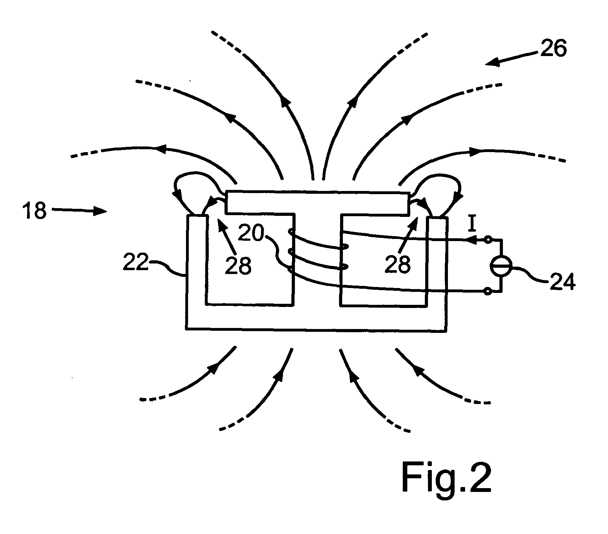

In Fig. 2 ist für ein genaueres Verständnis der Erfindung ein Spulenelement 18 gezeigt, bei dem sich eine Spule 20 in einem Schalenkern 22 befindet. In dem in Fig. 2 gezeigten Beispiel erzeugt eine symbolisch dargestellte Stromquelle 24 einen Wechselstrom l in der Spule 20. Diese erzeugt ein entsprechendes magnetisches Wechselfeld. Von diesem magnetischen Wechselfeld ragt ein Teil aus dem Schalenkern 22 heraus und als Streufeld 26 in eine Umgebung des Spulenelements 18 hinein. Ein innerhalb des Spulenkerns 22 befindlicher Teil des Spulenwechselfelds ist in Fig. 2 der Übersichtlichkeit halber nicht dargestellt.

Das Streufeld 26 ist in Fig. 2 durch Feldlinien dargestellt. Die Feldlinien sind dabei in Fig. 2 nicht vollständig dargestellt, was durch jeweils punktierte Linien angedeutet ist. Von einer Frequenz des Wechselstroms l hängt ab, wie groß der Anteil des Spulenwechselfelds der Spule 20 ist, der als Streufeld 26 aus dem Schalenkern 22 austritt. Je mehr Frequenzkomponenten ein Verlauf des Wechselstroms aufweist, deren Frequenz sehr hoch, also insbesondere über 100 kHz, ist, desto stärker ist das Streufeld 26 in der Umgebung des Spulenelements 22.

Der Schalenkern 22 weist Spalte 28 auf, die derart bemessen sind, dass sich für das Spulenelement 18 eine gewünschte Induktivität ergibt. In den Spalten 28 tritt ein in dem Schalenkern 22 verlaufender Anteil des Spulenwechselfelds zwischen zwei Wandungen des Schalenkerns 22 über. Feldlinien dieses Teils des Felds wölben sich von dem Schalenkern 22 weg und sind ebenfalls ein Bestandteil des Streufelds 26.

Bei dem Streufeld 26 ändert sich eine Feldstärke in Abhängigkeit von dem zeitlichen Verlauf des Wechselstroms 1. Für den Fall, dass ein (nicht dargestelltes) elektrisches Bauteil in einer Nähe des Spulenelements 18 von dem Streufeld 26 durchdrungen wird, kann durch eine Änderung der Feldstärke eine elektrische Spannung in dem Bauteil induziert werden. Diese induzierte Spannung kann eine Funktionsweise dieses Bauteils stören. Wenn ein (nicht dargestellter) elektrisch leitfähiger Körper in der Nähe des Spulenelements 18 angeordnet ist, kann durch eine in dem Körper induzierte Spannung ein elektrischer Strom erzeugt werden und dadurch ein Teil der Energie des Spulenwechselfelds in dem Körper z.B. in Wärmeenergie umgewandelt werden. Dies verschlechtert dann eine Spulengüte des Spulenelements 18.

Bei dem Spulenelement 18 kann anstelle eines Schalenkerns auch ein beliebig anders geformter Spulenkern bereitgestellt sein. Es ist auch möglich, bei einem Spulenelement eine Spule ohne einen Spulenkern, d.h. eine Luftspule, bereitzustellen.

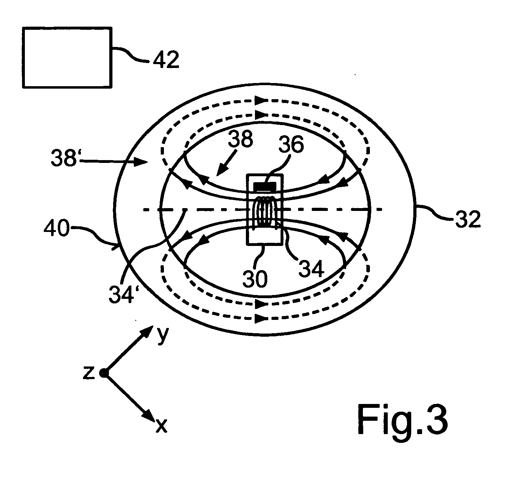

Für die Folgenden Erläuterungen ist zur Verbesserung der Orientierung in Fig. 3, Fig. 4 und Fig. 5 jeweils ein Koordinatensystem dargestellt, wobei die Richtungen der drei Koordinatensysteme in den Figuren einander entsprechen.

In Fig. 3 ist eine Draufsicht auf ein Spulenelement 30 gezeigt, welches in einem Rohr 32 aus Ferrit angeordnet ist. Das Ferritrohr 32 ist ein Körper aus einem magnetischen Material. Es kann z.B. auf eine Leiterplatte geklebt sein. Die Leiterplatte kann beispielsweise Bestandteil einer Schaltungsanordnung eines LawinenverschüttetenSuchgeräts (LVS) sein. Ein Außendurchmesser des Ferritrohrs 32 kann beispielsweise 6 mm betragen. Das Spulenelement 30 kann ein SMD-Bauteil sein. Von dem Spulenelement 30 sind eine Spule 34 und ein Kern 36 lediglich symbolisch dargestellt. In Fig. 3 nicht gezeigt sind Anschlussleitungen für die Spule 34.

Das Spulenelement 30 gehört zu einem Schaltregler, mittels welchem eine Batteriespannung von 1,5 V einer Batterie in eine Betriebsspannung für ein tragbares Gerät gewandelt wird. Die Betriebsspannung kann dabei beispielsweise 3,3 V oder 4,5 V betragen. Mittels eines in Fig. 3 nicht dargestellten Schalters des Schaltreglers wird ein Stromkreis, der die Batterie und die Spule 34 umfasst, in zeitlichen Abständen von wenigen Millisekunden oder sogar einem Bruchteil einer Millisekunde geschlossen und wieder unterbrochen. Durch die Spule 34 wird dadurch ein magnetisches Wechselfeld erzeugt, bei dem sich eine Feldstärke in Abhängigkeit von dem Stromfluss durch die Spule 34 ändert.

Von dem magnetischen Wechselfeld erstreckt sich ein Teil als Streufeld 38 in einen Bereich außerhalb des Spulenelements 30. Zu dem Streufeld 38 sind in Fig. 3 ähnlich wie in Fig. 2 Feldlinien dargestellt. Wie durch die Richtungspfeile der Feldlinien in Fig. 3 angedeutet ist, treten die Feldlinien aus dem Spulenelement 30 aus und in das Ferritrohr 32 ein. Das Ferritrohr 32 umgibt das Spulenelement 30 in einer x-y-Ebene vollständig. Eine Achse 34' der Spule 34 ist in der x-y-Ebene angeordnet. Eine magnetische Leitfähigkeit des Ferritrohrs 32 ist für das Streufeld 38 derart hoch, dass der in das Ferritrohr 32 eintretende Teil des Streufelds innerhalb des Ferritrohrs um das Spulenelement 30 herum auf eine Rückseite desselben geführt wird. In Fig. 3 ist der Verlauf der Feldlinien des Streufelds 38 innerhalb des Ferritrohrs 32 durch gestrichelte Linien 38' angedeutet. Auf der Rückseite des Spulenelements 30 treten die Feldlinien dann wieder aus dem Ferritrohr 30 aus und schließen sich in dem Spulenelement 30. Mit anderen Worten schließen sich diese Feldlinien des Streufelds über das Ferritrohr 30. Die runde Form des Ferritrohrs 30 verhindert, dass von dem Streufeld 38 ein signifikanter Teil über eine Außenwand 40 des Ferritrohrs 30 nach außen aus dem Ferritrohr 30 austritt.

In einer Nähe des Schaltreglers ist ein Bauteil 42 auf der Leiterplatte angeordnet. Das Bauteil kann beispielsweise eine Ferritantenne sein, wie sie beispielsweise für ein Lawinenverschütteten-Suchgerät verwendet werden kann. Weitere Beispiele sind eine Antenne eines RFID-Empfängers und ein Hall-Sensor. Die in dem Ferritrohr 32 verlaufenden Feldlinien 38' sind an dem Bauteil 42 vorbeigeführt. Würde man das Ferritrohr 32' entfernen, würde sich das Streufeld 38 soweit von dem Spulenelement 30 weg erstrecken, dass ein Teil des Streufelds 38 auch das Bauelement 42 durchdringen würde. Dies würde dann in dem Bauteil beim Wechseln der Feldstärke des Streufelds 38 eine Störspannung induzieren.

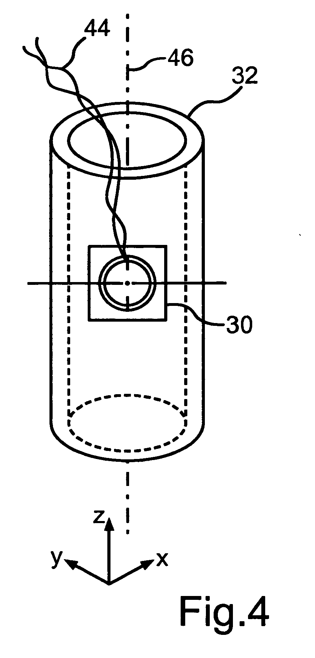

In Fig. 4 sind das Spulenelement 30 und das Ferritrohr 32 noch einmal in einer perspektivischen Ansicht gezeigt. Für eine bessere Veranschaulichung ist das Ferritrohr 32 in Fig. 4 durchsichtig dargestellt. Das Spulenelement 30 ist mittels eines Klebstoffs in dem Ferritrohr 32 gehalten. Die Leitungen 44 der Spule 34 sind an einem Ende des Ferritrohrs 32 aus diesem herausgeführt und an Anschlüssen der Leiterplatte angelötet. Die Leitungen 44 sind dabei verdrillt. Dies bewirkt, dass ein von dem in den Leitungen 44 geführten Wechselstrom kein störendes magnetisches Wechselfeld in einer Umgebung der Leitungen 44 erzeugt wird.

Die Spule 34 ist derart in dem Ferritrohr ausgerichtet, dass ein Achse der Spule, wie sie durch Windungen der Spule bestimmt ist, in der x-y-Ebene angeordnet ist. Eine Achse 46 des Ferritrohrs 32 steht senkrecht zur Achse der Spule 34. In Fig. 4 verläuft die Achse 46 somit parallel zur z-Achse des Koordinatensystems.

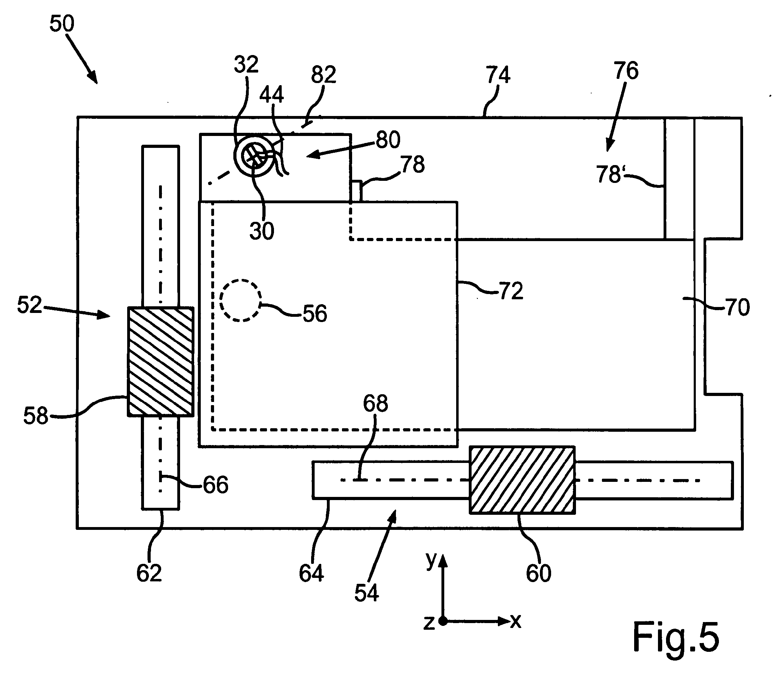

In Fig. 5 ist ein Lawinenverschütteten-Suchgerät (LVS) oder kurz Suchgerät 50 gezeigt. Ein Deckel des Suchgeräts 50 ist entfernt worden und in Fig. 5 nicht dargestellt. Das Suchgerät 50 weist drei Ferritantennen 52, 54, 56 auf, mit denen elektromagnetische Funkwellen eines Senders einer verschütteten Person empfangen werden können. Die Ferritantennen 52, 54, 56 sind Bestandteil einer elektrischen Schaltungsanordnung eines Empfängers des Suchgeräts 50. Die Ferritantennen 52, 54, 56 bilden zusammen ein Schaltungselement der elektrischen Schaltung des Empfängers. Bei ihnen ist eine Spannung induzierbar, wenn sie von einem magnetischen Wechselfeld durchdrungen sind.

Jede Ferritantenne 52, 54, 56 weist eine Antennenspule 58, 60 auf. Ein Verlauf von Wicklungen der Antennenspulen 58, 60 ist in Fig. 5 durch schräge Linien angedeutet. Die Spulen 58, 60 sind jeweils auf einen Ferritstab 62, 64 geschoben. Spulenachsen 66, 68 der Antennenspulen 58, 60 sind jeweils senkrecht zueinander angeordnet. Dabei ist die Spulenachse 66 der Ferritantenne 52 parallel zur y-Achse angeordnet. Die Spulenachse 68 der Ferritantenne 54 ist parallel zur x-Achse angeordnet. Die Spulenachse der Ferritantenne 56 steht senkrecht zur Bildebene von Fig. 5 und verläuft parallel zur z-Achse. Jede der Ferritantennen 52, 54, 56 weist eine Vorzugsempfangsrichtung auf. Daher ist es möglich, einen Sender in einer beliebigen Richtung zu orten, ohne dabei das Suchgerät 50 verschwenken zu müssen.

Zu dem Suchgerät 50 gehört auch eine Leiterplatte 70, die ebenfalls Bestandteil der elektrischen Schaltung des Empfängers ist. Ein Teil der Leiterplatte 70 ist in Fig. 5 von einer Anzeige 72 überdeckt. Die Anzeige 72 verdeckt auch die Ferritantenne 56. Daher sind Teile der Leiterplatte 70 und die Ferritantenne 56 mit gestrichelten Linien dargestellt.

Die beschriebenen Bauteile sind in ein Gehäuse 74 des Suchgeräts 50 eingebaut. Das Gehäuse 74 weist auch ein Batteriefach 76 auf, in welchem beispielsweise eine Mignon-Batterie eingelegt werden kann. Über Kontakte 78, 78' ist eine eingelegte Batterie dann mit einem Schaltregler 80 elektrisch gekoppelt. Durch den Schaltregler 80 kann aus einer von der Batterie erzeugten Batteriespannung von beispielsweise 1,5 V eine Betriebsspannung von beispielsweise 4,5 V zum Betreiben der elektrischen Schaltung des Empfängers und der Anzeige 72 erzeugt werden.

Für die weiteren Erläuterungen sei angenommen, dass ein Spulenelement des Schaltreglers 80 und ein Körper, in welchem das Spulenelement angeordnet ist, dem in den Fig. 3 und 4 gezeigten Spulenelement 30 bzw. dem Ferritrohr 32 entsprechen. Entsprechend sind für das Spulenelement 30 und das Ferritrohr 32 in Fig. 5 gleiche Bezugszeichen vergeben wie in den Fig. 3 und 4.

Im Betrieb des Suchgeräts 50 erstreckt sich zwar ein Teil eines Streufelds des Spulenelements 30 auch jenseits des Ferritrohrs 32. Dennoch ist eine Störspannung, wie sie deshalb in den Antennenspulen 58 und 60 induziert werden kann, derart gering, dass ein Empfang eines Signals, welches ein Sender von außerhalb des Suchgeräts 50 her sendet, nicht signifikant beeinträchtigt ist. Auch in der Antennenspule der Ferritantenne 56 wird nur eine derart geringe Störspannung induziert, dass ein Empfang eines Signals eines Senders nicht signifikant von dem Streufeld beeinträchtigt ist. Durch das Ferritrohr 32 ist ein überwiegender Teil des Streufelds des Spulenelements 30 an den Antennenspulen der Ferritantennen 52, 54, 56 vorbeigeführt.

Die Leitungen 44 verbinden die Spule des Spulenelements 30 mit Anschlüssen auf der Leiterplatte 70. Die Spulenachse 82 der Spule des Spulenelements 30 und die Spulenachsen 66, 68 der Antennenspulen 58 und 60 sind alle in x-y-Ebene, also in einer gemeinsamen Ebene, angeordnet. Die Spulenachse der Ferritantenne 56 steht senkrecht zur Spulenachse 82. Bezüglich der Spulenachsen 66 und 68 schließt die Spulenachse 82 einen Winkel von ca. 45° ein. Bei dieser Anordnung erzeugt das von dem Spulenelement 30 ausgehende Streufeld eine besonders geringe Störspannung in den Antennenspulen 58 und 60.

Bei dem Schaltregler 80 wird ein (nicht dargestellter) Schalter, der dem Schalter S des in Fig. 1 beschriebenen Schaltreglers 10 entspricht, bedarfsweise mit einer Frequenz von 450 kHz geschaltet. Ein entsprechendes Signal wird von einem (ebenfalls nicht dargestellten) Oszillator erzeugt, der zugleich auch ein Signal für einen Mischer des Empfängers erzeugt. Mittels des Mischers wird ein über die Ferritantennen empfangenes Sendesignal eines Senders heruntergemischt. Das Sendesignal weist eine Frequenz von 457 kHz auf. Mit dem Suchgerät 50 ist es möglich, den Sender in einer Entfernung von bis zu 40 m zu orten.

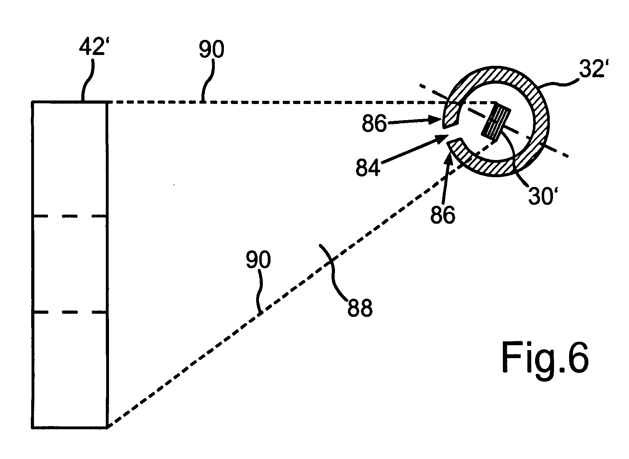

In Fig. 6 ist eine Draufsicht auf ein Spulenelement 30' gezeigt, das in einem geschlitzten Ferritrohr 32' angeordnet ist. Das Ferritrohr 32' weist einen Längsspalt 84 auf, der parallel zu einer Längsachse des Ferritrohrs 32' verläuft. Das Ferritrohr 32' ist ein Körper zum Führen eines magnetischen Streufelds des Spulenelements 30'.

Durch den Längsspalt 84 hindurch kann sich zwar ein Teil des magnetischen Streufelds des Spulenelements 30' in eine Umgebung außerhalb des Ferritrohrs 32' erstrecken. Dennoch wird durch das Ferritrohr 32' ein ausreichend großer ein Teil des Streufelds an einem elektrischen Bauteil 42' vorbeigeführt. Deshalb wird von dem sich in die Umgebung des Ferritrohrs 32' erstreckenden Streufeld keine signifikante Störung in dem Bauteil 42' verursacht.

Um einen ausreichenden Teil des Streufelds an dem Bauteil 42' vorbeizuführen, wurde beim Ausrichten des Ferritrohrs 32' bezüglich des Bauelements 42' darauf geachtet, dass eine Wandung 86 des Ferritrohrs 30 in einem Bereich 88 zwischen dem Spulenelement 30' und dem Bauteil 42' angeordnet ist. Dieser Bereich 88 ist durch Sichtlinien 90 definiert. Ein Verlauf einer Sichtlinie wird konstruiert, indem eine Kante des Bauteils 42', durch welche das Bauteil 42' aus Sicht des Spulenelements 30' in eine bestimmte Raumrichtung begrenzt ist, mit einer Kante des Spulenelements 30' verbunden wird, durch welche das Spulenelement 30' aus Sicht des Bauteils 42' in dieselbe Raumrichtung begrenzt ist. Zum Konstruieren der Sichtlinien 90 muss das Ferritrohr 32', oder allgemeiner der Körper zum Führen des Streufelds, natürlich weggedacht werden.

Durch die Beispiele ist gezeigt, wie es die Erfindung ermöglicht, einen Schaltregler mit einem Spulenelement in der Nähe eines für magnetische Wechselfelder hoch empfindlichen Bauteils zu betreiben, ohne dass dadurch eine Störspannung in diesem Bauteil induziert wird, durch welche die Funktionstüchtigkeit des Bauteils beeinträchtigt wird. Durch Anordnen des Spulenelements des Schaltreglers in einem Körper aus einem magnetischen Material werden die Feldlinien des von dem Spulenelement ausgehenden Streufelds an dem Bauteil vorbeigeführt, so dass sie keine Spannung in diesem induzieren.

## Patentansprüche

1. Suchgerät (50) mit einer Schaltungsanordnung (70), die
- ein elektrisches Schaltungselement (42, 42') umfasst, mit welchem ein elektrisches Signal bei Durchdringung des Schaltungselements durch ein magnetisches Wechselfeld erzeugbar ist,
- wobei das elektrische Schaltungselement mindestens eine Ferritantenne (52, 54, 56) mit einer Antennenspule (58, 60) umfasst;
**dadurch gekennzeichnet,**
**dass** die Schaltungsanordnung (70) einen Schaltregler (80) zum Wandeln einer Eingangsgleichspannung in eine Ausgangsgleichspannung umfasst, welcher ein von dem Schaltungselement (42, 42') verschiedenes Spulenelement (30, 30') mit einer Spule (34) zum Erzeugen eines magnetischen Spulenwechselfeldes umfasst,
wobei bei dem Schaltregler (80) ein Betrag der Eingangsgleichspannung kleiner als ein Betrag der Ausgangsgleichspannung ist,
wobei ein Verlauf einer Feldstärke des Spulenwechselfeldes zumindest für eine begrenzte Zeitdauer eine bestimmte Frequenzkomponente in einem Bereich zwischen 300 und 600 kHz aufweist, und
wobei sich im Betrieb der Schaltungsanordnung (70) ein Teil des Spulenwechselfeldes als ein magnetisches Streufeld in eine Umgebung des Spulenelements (30, 30') erstreckt,
wobei das Spulenelement (30, 30')
a) in zumindest einer Ebene vollständig von einem Körper (32) umgeben ist, oder
b) in einem rohrförmigen Körper (32') angeordnet ist, dessen Wandung (86), die in einem Bereich (88) zwischen dem Spulenelement (30') und dem Schaltungselement (42') angeordnet ist, einen Längsspalt (84) aufweist, wobei der Körper (32, 32') zumindest teilweise aus einem magnetischen Material gebildet ist,
welches für die bestimmte Frequenzkomponente eine derart bemessene magnetische Leitfähigkeit aufweist, dass zumindest ein Teil (38') des Streufelds (38, 38') in dem Körper (32, 32') führbar ist, und
**dass** die Form des Körpers (32, 32') derart ausgestaltet ist, dass von dem mittels des Körpers (32, 32') geführten Teil (38') des Streufelds (38, 38') zumindest ein Teil an dem Schaltungselement (42, 42') vorbeiführbar ist, wobei der Körper (32, 32') gleichmäßig gekrümmte Wandungen aufweist, wobei der Körper ein Rohr (32, 32') oder eine Kuppel ist und im Falle eines Rohrs eine Achse (82) der Spule (34) senkrecht zu einer Achse (46) des Rohrs (32, 32') angeordnet ist.

2. Suchgerät nach Anspruch 1,
**dadurch gekennzeichnet,**
**dass** der in dem Körper (32, 32') geführte Teil des Streufelds zumindest 50 Prozent, bevorzugt über 70 Prozent, insbesondere über 90 Prozent, einer magnetischen Gesamtenergie des Streufelds umfasst.

3. Suchgerät nach einem der Ansprüche 1 oder 2,
**dadurch gekennzeichnet,**
**dass** das Spulenelement (30) zusätzlich einen Spulenkern (36) zum Festlegen einer Induktivität des Spulenelements (30) aufweist, wobei sich ein Teil des Spulenwechselfelds in dem Spulenkern befindet und sich das Streufeld (38, 38') als der übrige Teil des Spulenwechselfelds ergibt.

4. Suchgerät nach einem der vorhergehenden Ansprüche,
**dadurch gekennzeichnet,**
**dass** das Material des Körpers eine derart geringe elektrische Leitfähigkeit aufweist, dass sich bei dem Spulenelement ein Wert für eine Spulengüte, welchen das Spulenelement aufweist, wenn es sich außerhalb des Körpers befindet, von einem Wert für die Spulengüte, welchen ds Spulenelement aufweist, wenn es in dem Körper angeordnet ist, um weniger als 30 Prozent, bevorzugt weniger als 15 Prozent, unterscheidet.

5. Suchgerät nach einem der vorhergehenden Ansprüche,
**dadurch gekennzeichnet,**
**dass** das Material ein amorphes Metall und/oder ein Ferrit ist.

6. Suchgerät nach einem der vorhergehenden Ansprüche,
**dadurch gekennzeichnet,**
**dass** das Schaltungselement zumindest eine weitere Ferritantenne (52, 54) mit einer weiteren Antennenspule (58, 60) umfasst, wobei die Achse (82) der Spule des Spulenelements sowie die Achsen (66, 68) der beiden Antennenspulen (58, 60) in einer gemeinsamen Ebene (x-y-Ebene) angeordnet sind.

## Claims

1. Detector (50) including a circuit assembly (70), which
- includes an electric circuit element (42, 42'), by which an electric signal can be generated upon penetration of the circuit element by an alternating magnetic field,
- wherein the electric circuit element includes at least one ferrite antenna (52, 54, 56) with an antenna coil (58, 60);
**characterized in that**
the circuit assembly (70) includes a switching controller (80) for converting an input direct voltage into an output direct voltage, which includes a coil element (30, 30') different from the circuit element (42, 42'), with a coil (34) for generating a coil alternating magnetic field,
wherein a magnitude of the input direct voltage is less than a magnitude of the output direct voltage in the switching controller (80),
wherein a progression of a field strength of the coil alternating field has a certain frequency component in a range between 300 and 600 kHz at least for a limited period of time, and
wherein a part of the coil alternating field extends into an environment of the coil element (30, 30') as a stray magnetic field in the operation of the circuit assembly (70),
wherein the coil element (30, 30')
a) is completely surrounded by a body (32) in at least one plane, or
b) is disposed in a tubular body (32'), the wall (86) of which, which is disposed in an area (88) between the coil element (30') and the circuit element (42'), has a longitudinal gap (84),
wherein the body (32, 32') is at least partially formed of a magnetic material, which has a magnetic conductivity for the certain frequency component dimensioned such that at least a part (38') of the stray field (38, 38') can be conducted in the body (32, 32'), and
that the shape of the body (32, 32') is configured such that at least a part of the part (38') of the stray field (38, 38') conducted by means of the body (32, 32') can be conducted past the circuit element (42, 42'),
wherein the body (32, 32') has uniformly curved walls,
wherein the body is a tube (32, 32') or a dome, and in case of a tube an axis (82) of the coil (34) is disposed perpendicularly to an axis (46) of the tube (32, 32').

2. Detector according to claim 1,
**characterized in that**
the part of the stray field conducted in the body (32, 32') includes at least 50 percent, preferably above 70 percent, in particular above 90 percent, of a magnetic overall energy of the stray field.

3. Detector according to any one of claims 1 or 2,
**characterized in that**
the coil element (30) additionally has a coil core (36) for determining an inductance of the coil element (30), wherein a part of the coil alternating field is located in the coil core and the stray field (38, 38') results as the remaining part of the coil alternating field.

4. Detector according to any one of the preceding claims,
**characterized in that**
the material of the body has such a low electrical conductivity that in the coil element a value for a coil quality that the coil element has, if it is outside of the body, differs from a value for the coil quality that the coil element has, if it is disposed in the body, by less than 30 percent, preferably less than 15 percent.

5. Detector according to any one of the preceding claims,
**characterized in that**
the material is an amorphous metal and/or a ferrite.

6. Detector according to any one of the preceding claims,
**characterized in that**
the circuit element includes at least one further ferrite antenna (52, 54) with a further antenna coil (58, 80), wherein the axis (82) of the coil of the coil element as well as the axes (66, 68) of the two antenna coils (58, 60) are disposed in a common plane (x-y plane).

## Revendications

1. Appareil (50) de détection avec un agencement (70) de circuit, qui
- comprend un élément (42, 42') de circuit électrique, avec lequel un signal électrique peut être produit par pénétration de l'élément de circuit par un champ alternatif magnétique,
- moyennant quoi l'élément de circuit électrique comprend au moins une antenne (52, 54, 56) à noyau de ferrite avec une bobine (58, 60) d'antenne ;
**caractérisé en ce que**
l'agencement (70) de circuit comprend un régulateur (80) de commutation destiné à convertir une tension d'entrée en courant continu en une tension de sortie en courant continu, lequel comprend un élément (30, 30') de bobine, différent de l'élément (42, 42') de circuit, avec une bobine (34) destinée à produire un champ alternatif magnétique de bobine,
moyennant quoi une valeur de la tension d'entrée en courant continu est inférieure à une valeur de la tension de sortie en courant continu dans le régulateur (80) de commutation,
moyennant quoi une évolution de l'intensité du champ alternatif de bobine présente au moins une composante déterminée de fréquence pour une durée limitée dans une plage comprise entre 300 et 600 kHz et
moyennant quoi une partie du champ alternatif de bobine s'étend, lorsque l'agencement (70) de circuit est en fonction, s'étend comme un champ de dispersion magnétique dans un environnement de l'élément (30, 30') de bobine,
moyennant quoi l'élément (30, 30')
a) est entouré entièrement dans au moins un plan par un corps (32) ou
b) est agencé dans un corps (32') de forme tubulaire, dont la paroi (86), qui est agencée dans une zone (88) entre l'élément (30') de bobine et l'élément (42') de circuit, présente un interstice longitudinal (84), moyennant quoi le corps (32, 32') est formé au moins en partie dans un matériau magnétique,
lequel présente pour la composante déterminée de fréquence une conductibilité magnétique calculée de telle sorte qu'au moins une partie (38') du champ (38, 38') de dispersion peut être guidée dans le corps (32, 32') et
que la forme du corps (32, 32') est configurée de telle sorte qu'au moins une partie peut être amenée à passer devant l'élément (42, 42') de circuit par la partie (38') du champ (38, 38') de dispersion guidée au moyen du corps (32, 32'),
moyennant quoi le corps (32, 32') présente des parois courbées de manière uniforme,
moyennant quoi le corps est un tube (32, 32') ou une coupole et dans le cas d'un tube, un axe (82) de la bobine (34) est agencé verticalement par rapport à un axe (46) du tube (32, 32').

2. Appareil de détection selon la revendication 1,
**caractérisé en ce que**
la partie du champ de dispersion guidée dans le corps (32, 32') comprend au moins 50 pour cent, de préférence plus de 70 pour cent, en particulier plus de 90 pour cent, d'une énergie magnétique totale du champ de dispersion.

3. Appareil de détection selon l'une des revendications 1 ou 2,
**caractérisé en ce que**
l'élément (30) de bobine présente en plus un noyau (36) de bobine destiné à déterminer une inductance de l'élément (30) de bobine, moyennant quoi une partie du champ alternatif de bobine se trouve dans le noyau de bobine et le champ (38, 38') de dispersion est l'autre partie du champ alternatif de bobine.

4. Appareil de détection selon l'une des revendications précédentes,
**caractérisé en ce que**
le matériau du corps présente une conductibilité électrique faible de telle sorte que, dans le cas de l'élément de bobine, une valeur de qualité de la bobine, qui présente l'élément de bobine, lorsqu'il se trouve en dehors du corps, se différencie d'une valeur de qualité de la bobine, qui présente l'élément de bobine, lorsqu'il se trouve dans le corps, de moins de 30 pour cent, de préférence moins de 15 pour cent.

5. Appareil de détection selon l'une des revendications précédentes,
**caractérisé en ce que**
le matériau est un métal amorphe et / ou un ferrite.

6. Appareil de détection selon l'une des revendications précédentes,
**caractérisé en ce que**
l'élément de circuit comprend au moins une autre antenne (52, 54) à noyau de ferrite avec une autre bobine (58, 60) d'antenne, moyennant quoi l'axe (82) de la bobine de l'élément de bobine, ainsi que les axes (66, 68) des deux bobines (58, 60) d'antenne sont agencés dans un plan (plan x - y) commun.
